# EUROPÄISCHE PATENTSCHRIFT

(11) **EP 3 036 378 B1**
(45) Veröffentlichungstag und Bekanntmachung des Hinweises auf die Patenterteilung: **14.06.2017**
(21) Anmeldenummer: 14747656.8
(22) Anmeldetag: 05.08.2014
(51) Int. Cl.: E02D 27/42

(54) **WINDENERGIEANLAGEN-FUNDAMENT UND WINDENERGIEANLAGE**
WIND TURBINE FOUNDATION AND WIND TURBINE
SOCLE D'ÉOLIENNE ET ÉOLIENNE

(30) Priorität: 19.08.2013 DE 102013216343
(43) Veröffentlichungstag der Anmeldung: 29.06.2016
(73) Patentinhaber: Wobben Properties GmbH, 26607 Aurich (DE)
(72) Erfinder: HÖLSCHER, Norbert, 26607 Aurich (DE)
(74) Vertreter: Eisenführ Speiser
(86) Internationale Anmeldenummer: PCT/EP2014/066823
(87) Internationale Veröffentlichungsnummer: WO 2015/024772

(56) Entgegenhaltungen:
- WO-A2-2011/030199
- DE-A1- 4 037 438

## Beschreibung

Die vorliegende Erfindung betrifft ein Windenergieanlagen-Fundament sowie eine Windenergieanlage.

Die Fundamente von Windenergieanlagen sind von großer Bedeutung, da die Windenergieanlage eine Lebensdauer von mindestens 20 Jahren aufweisen soll. Fundamente für Windenergieanlagen werden typischerweise durch Ausheben einer Baugrube, Eindringen einer Sauberkeitsschicht, Aufstellen eines Fundamenteinbauteils, Durchführen der benötigten Bewehrungsarbeiten und einem anschließenden Auffüllen der Baugrube mit Zement hergestellt. Damit werden die Fundamente üblicherweise vor Ort durch Ortbeton gegossen und die Qualität des Fundamentes ist abhängig von den klimatischen Bedingungen am Aufstellungsort.

WO 2004/101898 zeigt ein Fundament einer Windenergieanlage, welches durch vorgefertigte Betonfertigteile aufgebaut wird. Das Fundament weist dazu ein hohlzylindrisches Basiselement mit einer Mehrzahl von radial dazu beabstandeten Fußmodulen auf. Die Fußmodule werden an dem Basismodul sowie miteinander verspannt, siehe auch WO2011/030199A2. Es ist eine Aufgabe der vorliegenden Erfindung, ein Windenergieanlagen-Fundament sowie eine entsprechende Windenergieanlage vorzusehen, welche aus einer Mehrzahl von vorabgefertigten Betonfertigteilen besteht und eine verbesserte Statik aufweist.

Diese Aufgabe wird durch ein Windenergieanlagen-Fundament nach Anspruch 1 sowie durch eine Windenergieanlage nach Anspruch 6 gelöst.

Somit wird ein Windenergieanlagen-Fundament mit einer Mehrzahl von Betonfertigteil-Fundamentsegmenten vorgesehen. Die Fundamentsegmente weisen eine Mehrzahl von ersten und zweiten Hüllrohren auf, welche dazu dienen, Spannlitzen zur Verspannung der Fundamentsegmente aufzunehmen.

Das Fundamentsegment weist eine Unterseite, eine Oberseite zur Aufnahme eines unteren Turmsegmentes, eine Innenseite, eine nach innen gewölbte Außenseite, zwei Seitenflächen und einen Außenabschnitt auf.

Erste Hüllrohre erstrecken sich in Umfangsrichtung oder parallel zur Unterseite. Zweite Hüllrohre erstrecken sich zwischen dem Außenabschnitt und einer Oberseite des Fundamentsegmentes oder parallel zu den Seitenflächen.

Gemäß einem weiteren Aspekt der vorliegenden Erfindung folgen die zweiten Hüllrohre einer Krümmung der Außenseite.

Gemäß einem weiteren Aspekt der vorliegenden Erfindung weist das Fundament eine Mehrzahl von Segmentankern an dem Außenabschnitt im Bereich der Enden der zweiten Hüllrohre zur Aufnahme eines Endes einer Spannlitze zum Verspannen des Fundamentsegmentes auf.

Die Fundamentsegmente können die Form eines Kreisringsegments aufweisen.

Die Erfindung betrifft ebenfalls eine Windenergieanlage mit einem oben beschrieben Windenergieanlagen-Fundament. Die Fundamentsegmente sind durch Spannlitzen in den ersten und/oder zweiten Hüllrohren verspannt.

Gemäß einem Aspekt der vorliegenden Erfindung ist mindestens ein unteres Turmsegment auf dem Fundament derart platziert, dass es zusammen mit der Mehrzahl der Fundamentsegmente über Spannlitzen in den zweiten Hüllrohren verspannt.

Die Erfindung betrifft einen Gedanken, ein Windenergieanlagen-Fundament aus einer Mehrzahl von vorabgefertigten Betonfertigteilen vorzusehen. Die Betonfertigteile weisen eine Mehrzahl von Hüllrohren auf. Zur Montage des Fundamentes werden Spannlitzen in die Hüllrohre eingeführt und die Betonfertigteile des Fundamentes werden durch die Spannlitzen miteinander verspannt. Damit erfolgt eine Abspannung über das Fertigteilfundament. Die Abspannung z. B. mittels der Spannlitzen verläuft optional durch die Betonfertigteilsegmente bis zum Fuße des Segmentes, wo beispielsweise ein Segmentanker zur Verspannung vorgesehen werden kann.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines Fundamentes einer Windenergieanlage gemäß einem ersten Ausführungsbeispiel,
- Fig. 3: zeigt eine schematische Darstellung eines Fundamentsegmentes gemäß einem ersten Ausführungsbeispiel,
- Fig. 4: zeigt eine weitere schematische Darstellung eines Fundamentsegmentes gemäß dem ersten Ausführungsbeispiel, und
- Fig. 5: zeigt eine Draufsicht auf ein Windenergieanlagenfundament gemäß dem ersten Ausführungsbeispiel.

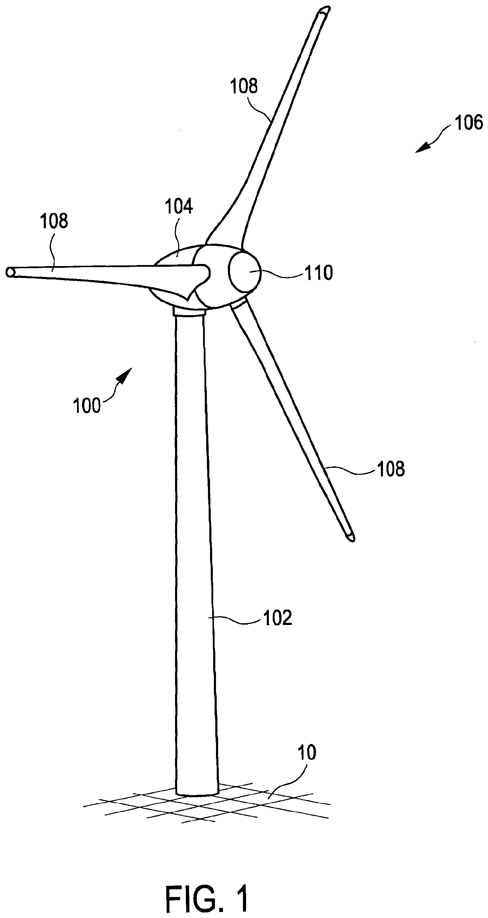

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

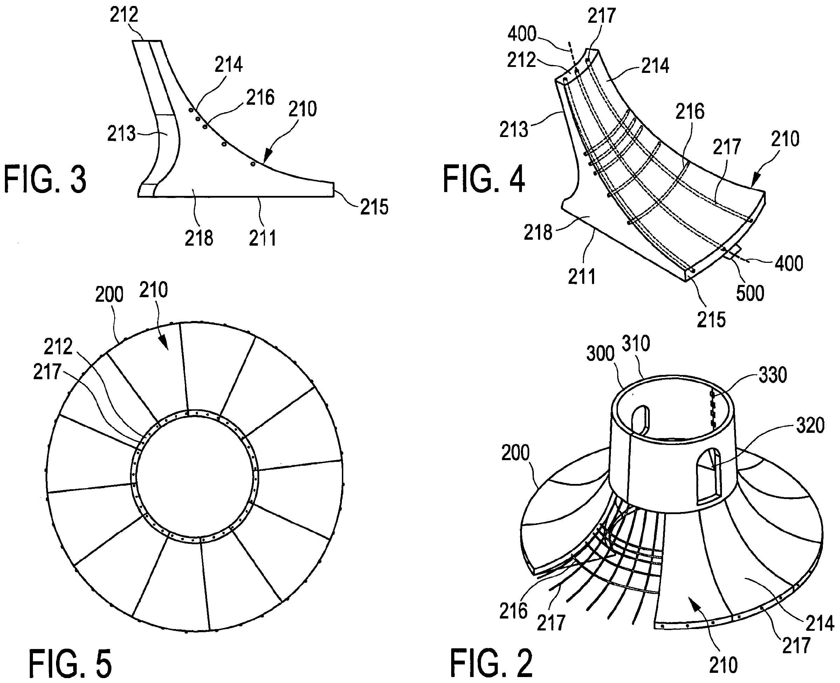

Fig. 2 zeigt eine schematische Darstellung eines Fundamentes einer Windenergieanlage gemäß einem ersten Ausführungsbeispiel. Das Fundament 200 weist eine Mehrzahl von Fundamentsegmenten 210 auf. Die Fundamentsegmente 210 werden nebeneinander platziert und bilden so das Fundament 200. Die Fundamentsegmente 210 können als Kreisringsegmente, als Kreissektoren oder Kreisausschnitte ausgestaltet sein. Die Fundamentsegmente 210 weisen erste und zweite Hüllrohre 216, 217 auf. Die ersten Hüllrohre 216 erstrecken sich in Querrichtung und die zweiten Hüllrohre 217 erstrecken sich in Längsrichtung des Fundamentsegmentes 210. Mittels der ersten und zweiten Hüllrohre 216, 217 können die Fundamentsegmente 210 unter Zuhilfenahme von Spannlitzen 400 verspannt werden.

Das Fundament 200 kann auch als Achteck oder mehreckig ausgestaltet sein. In diesem Fall kann das Fundament 200 aus n-Fundamentsegmenten 210 zusammengesetzt werden.

Auf einem oberen Ende des Fundamentes, d. h. auf der Oberseite, kann ein unteres Turmsegment oder beispielsweise ein Türsegment 300 platziert werden. Optional kann das untere Turmsegment bzw. das Türsegment 300 zusammen mit den Fundamentsegmenten 210 verspannt werden.

Die ersten Hüllrohre 216 werden dazu verwendet, Spannlitzen 400 aufzunehmen, um benachbarte Fundamentsegmente miteinander zu verspannen. Die zweiten Hüllrohre 217 werden dazu verwendet, Fundamentsegmente 210 optional zumindest mit einem unteren Turmsegment 300 mittels Spannlitzen zu verspannen. Optional können die Fundamentsegmente mit einer Mehrzahl von aufeinander gesetzten Turmsegmenten 210 verspannt werden.

Falls es sich bei dem Turm der Windenergieanlage um einen Turm bestehend aus Betonfertigteilen handelt, dann können die Betonfertigteilsegmente optional zusammen mit den Fundamentsegmenten 210 in einem Durchgang verspannt werden.

Fig. 3 zeigt eine schematische Darstellung eines Fundamentsegmentes gemäß dem ersten Ausführungsbeispiel. Das Fundamentsegment weist eine Unterseite 211, eine Oberseite 212, eine Innenseite 213, eine Außenseite 214 und einen Außenabschnitt 215 im Bereich der unteren Seite 211 auf. Die Innenseite 213 ist nach außen gewölbt und die Außenseite 214 ist nach innen gewölbt. Im Bereich der Außenseite 214 ist eine Mehrzahl von ersten Hüllrohren 216 vorgesehen. Diese ersten Hüllrohre 216 können sich optional im Wesentlichen parallel zu der Unterseite 211 des Segmentes erstrecken. Das Fundamentsegment 210 weist zwei gerade Enden 218 als Seitenflächen auf. Mittels der Seitenflächen 218 können benachbarte Fundamentsegmente nebeneinander platziert werden und anschließend mittels Spannlitzen 400, welche durch die ersten Hüllrohre geführt sind, verspannt werden. Spannanker 500 können an den Außenabschnitten im Bereich der Enden der zweiten Hüllrohre 217 vorgesehen sein, um die Spannlitzen 400 zu verspannen.

Fig. 4 zeigt eine weitere schematische Darstellung eines Fundamentsegmentes 210 gemäß dem ersten Ausführungsbeispiel. Das Fundamentsegment 210 weist eine vorzugsweise ebene Unterseite 211, eine Oberseite 212, eine nach außen gewölbte Innenseite 213, eine nach innen gewölbte Außenseite 214, zwei gerade Seitenflächen 218 sowie einen Außenabschnitt 215 auf. Das Fundamentsegment 210 weist ferner eine Mehrzahl von ersten Hüllrohren 216 auf, die im Wesentlichen parallel zu der Unterseite 211 vorgesehen sind. Ferner weist das Fundamentsegment 210 eine Mehrzahl von zweiten Hüllrohren 217 auf, welche im Wesentlichen parallel zu den Seitenflächen 218 ausgestaltet sind.

Fig. 5 zeigt eine schematische Draufsicht auf ein Fundament 200 gemäß dem ersten Ausführungsbeispiel. Das Fundament 200 besteht aus einer Mehrzahl von Fundamentsegmenten 210. An der Oberseite 212 der Fundamentsegmente 210 münden eine Mehrzahl von zweiten Hüllrohren.

Gemäß der Erfindung können optional die zweiten Hüllrohre 217 der Krümmung der Außenseite 214 der Fundamentsegmente 210 folgen. Ferner können die ersten Hüllrohre 210 der Krümmung der kreissegmentförmigen Fundamentsegmente 210 folgen, sodass die jeweiligen Enden der ersten Hüllrohre 216 an den Seitenflächen 218 mit den jeweiligen freien Enden der ersten Hüllrohre der Seitenflächen 218 in benachbarten Fundamentsegmenten 210 übereinstimmen, so dass Spannlitzen durch die ersten Hüllrohre 216 zur Verspannung der Fundamentsegmente geführt werden können.

Die Erfindung betrifft ebenfalls eine Windenergieanlage mit einem Fundament gemäß dem ersten Ausführungsbeispiel und einem Turm, der eine Mehrzahl von Turmsegmenten aufweist. Zumindest das unterste Turmsegment kann mittels Spannlitzen und den zweiten Hüllrohren 217 mit den jeweiligen Fundamentsegmenten 210 des Fundamentes 200 verspannt werden. Hierbei können z. B. Segmentanker an den Enden der zweiten Hüllrohre 217 in dem Außenabschnitt 215 gekoppelt sein.

Der Durchmesser des oberen Endes 212 des Fundamentes 200 ist kleiner als der Durchmesser der zusammengesetzten Außenabschnitte 215 der Fundamentsegmente 210. Der Durchmesser des oberen Endes 212 der zusammengesetzten Fundamentsegmente 210 entspricht dem Durchmesser des unteren Endes eines unteren Turmsegmentes 300.

## Patentansprüche

1. Windenergieanlagen-Fundament zur Aufnahme eines Windenergieanlagen-Turms mit einer Mehrzahl von Turmsegmenten, mit
einer Mehrzahl von Betonfertigteil-Fundamentsegmenten (210), welche eine Mehrzahl von ersten und zweiten Hüllrohren (216, 217) aufweist, welche dazu dienen, Spannlitzen zur Verspannung der Fundamentsegmente (210) aufzunehmen,
wobei das Fundamentsegment (210) eine Unterseite (211), eine Oberseite (212), auf welcher ein unteres Turmsegment platzierbar ist, eine Innenseite (213), eine nach innen gewölbte Außenseite (214), zwei Seitenflächen (218) und einen Außenabschnitt (215) aufweist,
wobei sich die ersten Hüllrohre (216) in Umfangsrichtung oder parallel zur Unterseite (211) erstrecken und sich die zweiten Hüllrohre (217) zwischen dem Außenabschnitt (215) und der Oberseite (212) des Fundamentsegmentes (210) oder parallel zu den Seitenflächen (218) erstrecken und
die zweiten Hüllrohre (217) einer Krümmung der Außenseite (214) folgen.

2. Fundament nach Anspruch 1, ferner mit
einer Mehrzahl von Segmentankern (500) an dem Außenabschnitt (215) im Bereich der Enden der zweiten Hüllrohre (217) zur Aufnahme eines Endes einer Spannlitze zum Verspannen des Fundamentsegmentes (210).

3. Windenergieanlage, mit
einem Windenergieanlagen-Fundament nach einem der Ansprüche 1 oder 2, wobei die Fundamentsegmente (210) durch Spannlitzen (400) in den ersten und zweiten Hüllrohren (216, 217) verspannt sind.

4. Windenergieanlage nach Anspruch 3, wobei
mindestens ein unteres Turmsegment (300) auf der Oberseite (112) des Fundaments (200) derart platziert ist, dass es zusammen mit der Mehrzahl der Fundamentsegmente (210) über Spannlitzen (400) in den zweiten Hüllrohren (217) verspannt ist.

## Claims

1. Wind energy plant foundation for receiving a wind energy plant tower with a plurality of tower segments,
with a plurality of ready-made concrete foundation segments (210) which has a plurality of first and second sheaths (216, 217) which serve to receive tension wires for bracing the foundation segments (210),
wherein the foundation segment (210) has an underneath side (211), an upper side (212) on which a lower tower segment can be placed, an inner side (213), an inwardly curved outer side (214), two side faces (218) and an outer section (215),
wherein the first sheaths (216) extend in the peripheral direction or parallel to the underneath side (211) and the second sheaths (217) extend between the outer section (215) and the upper side (212) of the foundation segment (210) or parallel to the side faces (218) and
the second sheaths (217) follow a curvature of the outside (214).

2. Foundation according to Claim 1, furthermore with a plurality of segment anchors (500) on the outer section (215) in the region of the ends of the second sheaths (217) for receiving an end of a tension wire for bracing the foundation segment (210).

3. Wind energy plant with a wind energy plant foundation according to one of Claims 1 or 2 wherein the foundation segments (210) are braced by tension wires (400) in the first and second sheaths (216, 217).

4. Wind energy plant according to Claim 3 wherein at least a lower tower segment (300) is placed on the upper side (112) of the foundation (200) so that it is braced together with the plurality of foundation segments (210) by way of tension wires (400) in the second sheaths (217).

## Revendications

1. Socle d'éolienne servant à recevoir une tour d'éolienne avec une multitude de segments de tour, avec
une multitude de segments de socle (210) en pièce préfabriquée en béton, qui présente une multitude de premiers et de deuxièmes tubes de gainage (216, 217), qui servent à recevoir des torons de serrage servant à haubaner les segments de socle (210),
dans lequel le segment de socle (210) présente un côté inférieur (211), un côté supérieur (212), sur lequel peut être placé un segment de tour inférieur, un côté intérieur (213), un côté extérieur (214) bombé vers l'intérieur, deux faces latérales (218) et une section extérieure (215),
dans lequel les premiers tubes de gainage (216) s'étendent dans la direction périphérique ou de manière parallèle par rapport au côté inférieur (211) et les deuxièmes tubes de gainage (217) s'étendent entre la section extérieure (215) et le côté supérieur (212) du segment de socle (210) ou de manière parallèle par rapport aux faces latérales (218), et
les deuxièmes tubes de gainage (217) suivent une courbure du côté extérieur (214).

2. Socle selon la revendication 1, avec en outre
une multitude de systèmes d'ancrages de segment (500) au niveau de la section extérieure (215) dans la zone des extrémités des deuxièmes tubes de gainage (217) afin de recevoir une extrémité d'un toron de serrage servant à haubaner le segment de socle (210).

3. Eolienne avec
un socle d'éolienne selon l'une quelconque des revendications 1 ou 2,
dans laquelle les segments de socle (210) sont haubanés par des torons de serrage (400) dans les premiers et deuxièmes tubes de gainage (216, 217).

4. Eolienne selon la revendication 3, dans laquelle
au moins un segment de tour (300) inférieur est placé sur le côté supérieur (112) du socle (200) de telle manière qu'il est haubané conjointement avec la multitude des segments de socle (210) par l'intermédiaire de torons de serrage (400) dans les deuxièmes tubes de gainage (217).
